# FASCICULE DE BREVET EUROPEEN

(11) **EP 1 052 050 B1**
(45) Date de publication et mention de la délivrance du brevet: **19.05.2004**
(21) Numéro de dépôt: 00401091.4
(22) Date de dépôt: 19.04.2000
(51) Int. Cl.: B23K 7/08

(54) **Procédé pour réduire l'émission de fumées rousses en oxycoupage**
Verfahren zur Verminderung von rötlichem Nebel, der beim Brennschneiden entsteht
Method used to diminish russet-red fumes in an oxycutting operation

(30) Priorité: 06.05.1999 FR 9905768
(43) Date de publication de la demande: 15.11.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Gantois, Eric, 59640 Dunkerque (FR); Orwat, Bernard, 59210 Coudekerque Branche (FR); Cannet, Gilles, 95620 Parmain (FR); Barthelet, Guy, 60170 Tracy le Val (FR)
(74) Mandataire: Pittis, Olivier

(56) Documents cités:
- EP-A- 0 866 140
- WO-A-92/04151
- US-A- 3 216 867
- US-A- 4 405 383
- US-A- 4 928 932
- US-A- 5 021 624

## Description

L'invention concerne un procédé d'oxycoupage d'une pièce métallique contenant du fer, en particulier une pièce d'acier, conformément au préambule de la revendication 1 (voir, par example, US-A-4 405 383) permettant de réduire ou minimiser l'émission de fumées rousses durant la dite opération d'oxycoupage.

Il est connu que le découpage par une technique d'oxycoupage de pièces d'acier de fortes épaisseurs, par exemple de plus de 200 mm d'épaisseur, peut conduire à la formation d'une quantité importante de fumées rousses constituées de poussières d'oxydes de fer.

Un phénomène analogue s'observe aussi lors d'une opération de découpe de telles pièces d'acier à l'aide de lances thermiques.

Afin d'assurer la protection des opérateurs, il peut être envisagé de procéder à une aspiration des fumées rousses produites.

Cependant, cette solution n'est pas idéale car elle nécessite la mise en oeuvre de moyens d'aspiration engendrant une élévation importante du coût global de l'opération, notamment à cause de la quantité importante de fumées générées.

Dès lors, ce type de découpe se fait classiquement à l'extérieur, c'est-à-dire en plein air, mais on comprend immédiatement que, procéder de la sorte, peuvent poser des problèmes de pollution de l'environnement.

Les fumées rousses étant la résultante d'une combinaison de l'oxygène avec le fer du matériau à couper donnant des oxydes de fer, il a été envisagé d'utiliser des mélanges gazeux en tant que gaz de coupe, par exemple des mélanges d'oxygène et d'un autre composé gazeux.

Or, en pratique, il a été constaté que, si de tels mélanges gazeux pouvaient parfois conduire à une diminution des émissions de fumées rousses, ceux-ci engendraient toujours une baisse notable de la productivité du procédé d'oxycoupage, ce qui n'est pas acceptable du point de vue industriel.

En effet, des essais réalisés sur site industriel ont montré que l'addition de plus de 3% (en volume) d'un composé gazeux dans l'oxygène de coupe engendre une dégradation si importante des performances du procédé d'oxycoupage que celui-ci n'est plus industriellement viable.

D'ailleurs, disposer d'oxygène pur pour la coupe est quasi-obligatoire lorsqu'il s'agit de couper des aciers plus ou moins homogènes en structure et en composition chimique et c'est souvent le cas pour des pièces de forte épaisseur.

Par ailleurs, on connaît le document US-A-4,405,383 qui enseigne une installation d'oxycoupage comprenant une source de gaz de coupe à base d'oxygène alimentant une buse de coupe et notamment une source de dioxyde de carbone alimentant des buses de distribution de dioxyde de carbone permettant, lors de son utilisation pour couper des bandes d'acier, de réduire la quantité de fumées rousses formées. Toutefois, selon ce document, les buses de distribution de dioxyde de carbone sont alignées en rangées situées de part et d'autre de la buse délivrant le jet d'oxygène de sorte de délivrer les jets de CO₂ hors de la saignée de coupe et latéralement à celle-ci, c'est-à-dire sur le dessus de la tôle à couper.

En outre, le document US-A-928,932 décrit une machine de coupage de bandes d'acier mettant en oeuvre plusieurs couples de buses au sein desquels une buse sert à délivrer un jet d'oxygène de coupe, alors que l'autre sert à délivrer une poudre utilisée durant le perçage des bandes.

De là, le problème qui se pose est de réduire la quantité de fumées rousses émises pendant une opération d'oxycoupage, sachant qu'il n'est pas possible de polluer l'oxygène d'oxycoupage sans réduire sensiblement sa productivité et qu'au-delà de 3 ou 4% d'impuretés, l'oxycoupage n'est industriellement plus viable.

La solution apportée par la présente invention consiste à injecter du CO₂ dans la saignée, derrière le jet d'oxygène de coupe à un niveau tel que le front de saignée puisse brûler avec de l'oxygène pur et que les oxydes formés soient chassés hors de la saignée par une atmosphère enrichie en CO₂.

En d'autres termes, la présente invention concerne un procédé d'oxycoupage d'une pièce métallique contenant du fer, en particulier une pièce d'acier, dans lequel au moins une saignée de coupe est réalisée en soumettant ladite pièce à au moins un gaz de coupe contenant de l'oxygène, caractérisé en ce que, pendant le coupage de ladite pièce avec ledit gaz de coupe, on envoie dans la saignée, en aval du gaz de coupe en considérant le sens de formation de la saignée de coupe, un jet de dioxyde de carbone (CO₂) gazeux, le jet de CO₂ étant incliné par rapport au jet de gaz de coupe, de sorte que le front de saignée soit soumis au flux de gaz de coupe contenant l'oxygène et que le jet de CO₂ contribue à chasser hors de la saignée les oxydes de fer se formant.

En effet, en procédant de la sorte, il a été mis en évidence que la quantité de fumées rousses produites pendant la coupe diminuait considérablement et ce, sans perte notable de productivité du procédé d'oxycoupage, étant donné que la coupe proprement dite est réalisée avec un jet d'oxygène pur ou contenant moins de 3 à 4% d'impuretés, de préférence moins de 0,5% d'impuretés.

Les fumées rousses étant liées aux oxydes de fer (FeO, Fe₂O₃, Fe₃O₄ ...), l'apport de CO₂ permet de diminuer ces fumées rousses lors de la réaction d'oxydation qui conduit à l'oxycoupage.

Selon le cas, le procédé de l'invention peut comprendre l'une ou plusieurs des caractéristiques suivantes :
- Le gaz de coupe est de l'oxygène, de préférence de l'oxygène contenant moins de 1% d'impuretés, de préférence encore de l'oxygène contenant moins de 0,35% d'impuretés, de préférence moins de 0,1%.
- La pièce métallique à couper est une pièce d'acier ayant une épaisseur d'au moins 100 mm, de préférence d'au moins 180 mm.
- La pression du jet de CO₂ est comprise entre 3,5 bar et 8 bar et/ou le débit de CO₂ est compris entre 9 et 22,5 m³/h. Le débit de CO₂ représente alors entre 2 et 5% environ du débit d'oxygène de coupe lorsque celui-ci est évalué à environ 450 m³/h.

De préférence, l'axe du chalumeau ou de la lance thermique délivrant le jet de gaz de coupe à base d'oxygène et l'axe de la buse de distribution de CO₂ forment entre eux un angle compris entre 0° et 70°, de préférence de l'ordre de 30° à 50°.

Un tel procédé peut être utilisé pour l'oxycoupage de brames d'acier notamment au silicium, ayant une épaisseur d'au moins 180 mm.

L'invention va être maintenant illustrée à l'aide d'exemples donnés à titre illustratif mais non limitatif.

### EXEMPLES :

Des pièces d'acier contenant du silicium ont été découpées par une technique classique d'oxycoupage mettant en oeuvre de l'oxygène en tant que gaz de coupe destiné à brûler le métal et donc à réaliser ainsi la saignée de coupe.

Si nécessaire, l'amorçage et/ou le maintien de la réaction d'oxycoupage peuvent être effectués au moyen d'une couronne de chauffe constituée de plusieurs jets de gaz de chauffe agencés périphériquement, en couronne, autour du jet d'oxygène de coupe.

En tant que gaz de chauffe, on peut utiliser un mélange combustible/carburant, par exemple, un mélange de crylène™, d'acétylène, de propane ou de gaz naturel et d'oxygène.

Afin de pouvoir vérifier l'efficacité du procédé de l'invention, les essais ont été réalisés, d'une part, selon une technique classique sans injection de CO₂ et, d'autre part, avec injection de CO₂ en aval du jet d'oxygène de coupe, conformément à l'invention.

Les paramètres opératoires sont les suivants :
- débit d'oxygène de coupe : 450 m³/h,
- pression d'oxygène de coupe : 13.10⁵ Pa,
- pression du gaz naturel de chauffe : 2,5.10⁵ Pa,
- débit de CO_{2 :} 15 m³/h,
- pression de CO_{2 :} 4.10⁵ Pa.

Il est à noter que la proportion d'oxygène servant à la réaction d'oxy combustion est de l'ordre de 20%, le reste sert principalement à évacuer le métal fondu de la saignée.

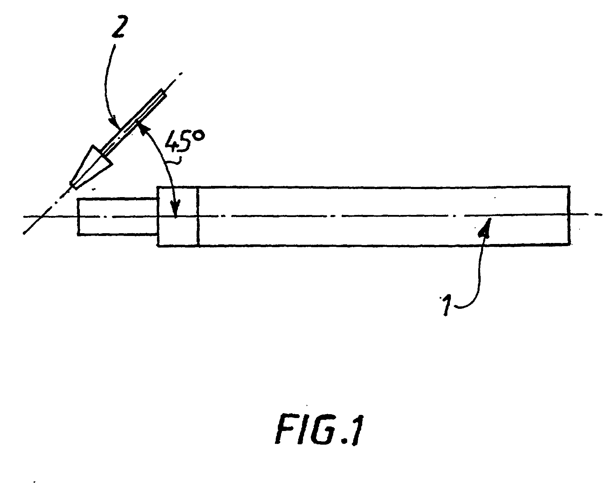

Comme schématisé sur la figure, on réalise l'injection du CO₂ gazeux au niveau de la sortie de la buse 1 d'oxycoupage, le mélange oxygène/CO₂ s'effectuant ainsi directement à la sortie de la buse 1.

Dans ce cas, l'axe de la buse 1 du chalumeau d'oxycoupage et l'axe de la buse 2 de distribution du CO₂ forment un angle de 45°.

Les résultats obtenus ont montré une réduction de 70 à 80% de l'émission de fumées rousses lorsqu'on met en oeuvre une injection de CO₂ en aval du jet de coupe, par rapport à un procédé classique sans injection de CO₂.

Toutefois, une légère augmentation de l'émission de fumées à parfois été observée en fin de coupe, laquelle est vraisemblablement due à un rebrûlage des scories métalliques évacuées par le jet d'oxygène de coupe.

Pour éliminer ces fumées résiduelles, on peut soit évacuer les scories dans un bac de liquide, par exemple de l'eau, soit surélever la pièce à découper pour éviter toute accumulation indésirable des scories métalliques en fin de coupe.

Le procédé selon l'invention peut être appliqué, en particulier, au domaine sidérurgique et à la découpe de pièces d'acier de forte épaisseur.

## Revendications

1. Procédé d'oxycoupage d'une pièce métallique contenant du fer, en particulier une pièce d'acier, dans lequel au moins une saignée de coupe est réalisée en soumettant ladite pièce à au moins un gaz de coupe contenant de l'oxygène, **caractérisé en ce que**, pendant le coupage de ladite pièce avec ledit gaz de coupe, on envoie dans la saignée, en aval du gaz de coupe en considérant le sens de formation de la saignée de coupe, un et de dioxyde de carbone (CO₂) gazeux, le jet de CO₂ étant incliné par rapport au jet de gaz de coupe, de sorte que le front de saignée soit soumis au flux de gaz de coupe contenant l'oxygène et que le jet de CO₂ contribue à chasser hors de la saignée les oxydes de fer se formant.

2. Procédé selon la revendication 1, **caractérisé en ce que** le gaz de coupe est de l'oxygène, de préférence de l'oxygène contenant moins de 1% d'impuretés.

3. Procédé selon l'une des revendications 1 ou 2, **caractérisé en ce que** le gaz de coupe est de l'oxygène contenant moins de 0,35% d'impuretés.

4. Procédé selon l'une des revendications 1 à 3, **caractérisé en ce que** la pièce métallique à couper est une pièce d'acier ayant une épaisseur d'au moins 100 mm, de préférence d'au moins 180 mm.

5. Procédé selon l'une des revendications 1 à 4, **caractérisé en ce que** la pression du jet de CO₂ est comprise entre 3,5 bar et 8 bar.

6. Procédé selon l'une des revendications 1 à 5, **caractérisé en ce que** le débit de CO₂ représente environ 2 à 5% du débit d'oxygène de coupe.

7. Procédé selon la revendication 1, **caractérisé en ce que** le jet de gaz de coupe est délivré par un chalumeau ou une lance thermique et le jet de C02 est délivrée par au moins une buse de distribution de CO₂ alimentée en CO₂ par ladite source de dioxyde de carbone, l'axe du chalumeau ou de la lance thermique et l'axe de la buse de distribution de CO₂ formant entre eux un angle compris entre 0° et 70°.

8. Procédé selon la revendication 7, **caractérisée en ce que** l'axe du chalumeau ou de la lance thermique et l'axe de la buse de distribution de CO₂ forment entre eux un angle de l'ordre de 30° à 50°.

## Patentansprüche

1. Verfahren zum Brennschneiden eines eisenhaltigen Metallstücks, insbesondere eines Stahlstücks, in dem mindestens eine Schnittfuge ausgeführt wird, indem das Stück mindestens einem sauerstoffhaltigen Schneidegas ausgesetzt wird, **dadurch gekennzeichnet, dass** während des Schneidens des Stücks mit dem Schneidegas in die Schnittfuge, stromabwärts vom Schneidegas, wenn man die Richtung der Ausbildung der Schnittfuge berücksichtigt, ein Strahl aus gasförmigem Kohlendioxid (CO₂) geschickt wird, wobei der CO₂-Strahl in Bezug auf den Strahl des Schneidegases geneigt ist, so dass der Vorderteil der Schnittfuge dem Fluss des sauerstoffhaltigen Schneidegases ausgesetzt ist und dadurch, dass der CO₂-Strahl dazu beiträgt, die sich bildenden Eisenoxide aus der Schnittfuge zu drängen.

2. Verfahren nach Anspruch 1, **dadurch gekennzeichnet, dass** das Schneidegas Sauerstoff ist, vorzugsweise Sauerstoff, der weniger als 1 % Unreinheiten enthält.

3. Verfahren nach einem der Ansprüche 1 oder 2, **dadurch gekennzeichnet, dass** das Schneidegas Sauerstoff ist, der weniger als 0,35 % Unreinheiten aufweist.

4. Verfahren nach einem der Ansprüche 1 bis 3, **dadurch gekennzeichnet, dass** das zu schneidende Metallstück ein Stahlstück mit einer Dicke von mindestens 100 mm, vorzugsweise von mindestens 180 mm, ist.

5. Verfahren nach einem der Ansprüche 1 bis 4, **dadurch gekennzeichnet, dass** der Druck des CO₂-Strahls zwischen 3,5 bar und 8 bar liegt.

6. Verfahren nach einem der Ansprüche 1 bis 5, **dadurch gekennzeichnet, dass** der CO₂-Durchsatz ungefähr 2 bis 5 % des Durchsatzes des Schneidesauerstoffs ausmacht.

7. Verfahren nach Anspruch 1, **dadurch gekennzeichnet, dass** der Strahl des Schneidegases durch einen Brenner oder eine thermische Lanze bereitgestellt und der CO₂-Strahl durch mindestens eine Düse zur Verteilung von CO₂ bereitgestellt wird, die durch die Kohlendioxidquelle mit CO₂ versorgt wird, wobei die Achse des Brenners oder der thermischen Lanze und die Achse der Düse zur Verteilung von CO₂ untereinander einen Winkel zwischen 0° und 70° bilden.

8. Verfahren nach Anspruch 7, **dadurch gekennzeichnet, dass** die Achse des Brenners oder der thermischen Lanze und der Achse der Düse zur Verteilung von CO₂ untereinander einen Winkel in der Größenordnung von 30° bis 50° bilden.

## Claims

1. Method of oxycutting a metal workpiece containing iron in particular a steel workpiece, in which at least one cutting kerf is produced by exposing the said workpiece to at least one cutting gas containing oxygen, **characterized in that**, while the said workpiece is being cut with the said cutting gas, a jet of gaseous carbon dioxide (CO₂) is sent into the kerf, downstream of the cutting gas when considering the direction of formation of the cutting kerf, the jet of CO₂ being inclined to the jet of cutting gas in such a way that the kerf front is exposed to the flow of cutting gas containing oxygen and the jet of CO₂ helps to expel the iron oxides being formed from the kerf.

2. Method according to Claim 1, **characterized in that** the cutting gas is oxygen, preferably oxygen containing less than 1% of impurities.

3. Method according to either of Claims 1 and 2, **characterized in that** the cutting gas is oxygen containing less than 0.35% of impurities.

4. Method according to one of Claims 1 to 3, **characterized in that** the metal workpiece to be cut is a steel workpiece having a thickness of at least 100 mm, preferably at least 180 mm.

5. Method according to one of Claims 1 to 4, **characterized in that** the pressure of the CO₂ jet is between 3.5 bar and 8 bar.

6. Method according to one of Claims 1 to 5, **characterized in that** the flow of CO₂ represents about 2 to 5% of the flow of cutting oxygen.

7. Method according to Claim 1, **characterized in that** the jet of cutting gas is delivered by a torch or a thermal lance and the jet of CO₂ is delivered by at least one CO₂ delivery nozzle supplied with CO₂ by the said carbon dioxide source, the axis of the torch or of the thermal lance and the axis of the CO₂ delivery nozzle making an angle of between 0° and 70° between them.

8. Method according to Claim 7, **characterized in that** the axis of the torch or of the thermal lance and the axis of the CO₂ delivery nozzle make an angle of around 30° to 50° between them.
